# EUROPEAN PATENT APPLICATION

(11) **EP 1 591 652 A2**
(43) Date of publication of application: **02.11.2005**
(21) Application number: 05007672.8
(22) Date of filing: 07.04.2005
(51) Int. Cl.: F02M 21/02, F02M 51/06, F02M 61/10

(54) **Gaseous fuel injection valve**

(30) Priority: 27.04.2004 JP 2004131339
(71) Applicant: Isuzu Motors Limited, Tokyo 140-8722 (JP)
(72) Inventor: Okada, Masaki, Fujisawa-shi Kanagawa 252-8501 (JP)
(74) Representative: Schaumburg, Thoenes, Thurn, Landskron

(57) **Abstract**

The present invention provides a gaseous fuel injection valve comprising a needle valve (10), a seat portion (30) contacting the needle valve (10), a sac portion (32) provided on a lower portion of the seat portion (30), and an injection hole (11) formed in a lower portion of the sac portion (32). The sac portion (32) is formed at no less than a predetermined length so that when the gaseous fuel injection valve (1) is mounted on a cylinder head (C/H) such that the injection hole (11) faces the interior of a combustion chamber (N) of an engine, the seat portion (30) is positioned above the lower surface of the cylinder head (C/H). Further, the fuel injection amount is increased in relation to the lift amount of the needle valve (10) by making the cross section of the seat portion (30) greater than the cross section of the sac portion (32).

## Description

The present invention relates to a fuel injection valve for injecting a gaseous fuel such as compressed natural gas (CNG), and more particularly to a gaseous fuel injection valve with which a sufficient fuel injection amount can be secured without increasing the maximum lift amount of a needle valve.

A device in which a needle valve accommodated movably within a barrel is lifted using a magnetostrictor to open an injection hole formed in the lower end of the barrel is known as a gaseous fuel injection valve for injecting a gaseous fuel such as compressed natural gas (CNG), propane gas or hydrogen (see Japanese Translation of International Patent Application Publication 2003-512555, for example). Injection valves in which the needle valve is lifted directly by a magnetostrictor are advantaged in that the drive responsiveness of the needle valve is favorable.

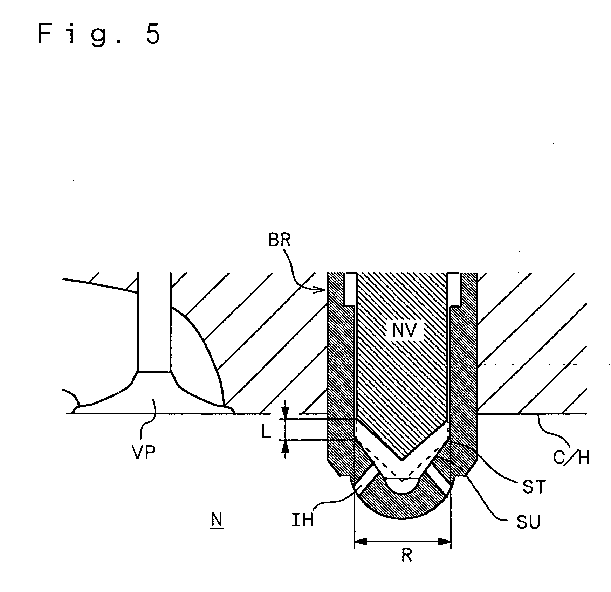

As shown in Fig. 5, in a conventional gaseous fuel injection valve, the lower end portion of a needle valve NV is formed into a taper, and an annular seat portion ST is formed in the lower portion of a barrel BR to abut against the lower end portion of the needle valve NV A flared sac portion SU is formed in succession from the lower portion of the seat portion ST, and injection holes IH are pierced through the sac portion SU.

As shown by the dotted line in the drawing, when the needle valve NV is positioned in its lowest position, or in other words when the lift amount of the needle valve NV is zero, the lower end portion of the needle valve NV and the seat portion ST of the barrel BR contact each other at a predetermined pressure such that the gap between the two members is sealed. As a result, fuel injection is not executed. Note that the gaseous fuel is supplied constantly up to the seat portion ST through a gap between the barrel BR and needle valve NV

On the contrary, as shown by the solid line in the drawing, when the needle valve NV is lifted by a magnetostrictor, not shown, the lower end portion of the needle valve NV is moved upward away from the seat portion ST. As a result, a gap is formed between the needle valve NV and seat portion ST, and the gaseous fuel supplied up to the seat portion ST passes through this gap to be injected through the injection holes IH.

Naturally, this type of gaseous fuel injection valve must be designed so that at least a maximum injection amount required by the engine can be injected. More specifically, the fuel injection valve must be designed such that the maximum fuel injection amount of the fuel injection valve (the injection amount at the maximum lift of the needle valve NV) is equal to or greater than the maximum injection amount required by the engine.

The energy density (exothermic energy per unit volume) of gaseous fuel is much smaller than that of a liquid fuel such as light oil or gasoline (approximately 1/1000 thereof in the case of CNG), and hence the maximum fuel injection amount required of a gaseous fuel injection valve is larger than that of a liquid fuel injection valve.

Incidentally, with a gaseous fuel injection valve such as that described above, the fuel injection amount is determined not only by the diameter and number of the injection holes IH, but also by the surface area of the gap formed between the lifted needle valve NV and the seat portion ST (the curtain area), the fuel injection period, the differential pressure of the fuel (the differential pressure on the upstream side and downstream side of the seat portion ST, and the differential pressure on the upstream side and downstream side of the injection holes IH), the passage coefficient, and so on.

In other words, even when the diameter and number of the injection holes IH is set in alignment with the maximum fuel injection amount required by the engine, if the other elements described above do not satisfy the conditions for obtaining the maximum fuel injection amount, it may be impossible to inject the maximum fuel injection amount required by the engine.

Here, if the fuel injection period is lengthened excessively, combustion of the air-fuel mixture is adversely affected, leading to a deterioration in thermal efficiency (fuel consumption rate), an increase in the exhaust gas temperature, and so on, and therefore the injection period must be set within a predetermined range.

It is also impossible to design the differential pressure of the fuel and the passage coefficient (the shape of the fuel passages in the fuel injection valve and so on) freely since these elements must be set on the basis of the characteristics and the like of the gaseous fuel in use, and since they affect combustion on the engine side.

Therefore, in order to increase the maximum fuel injection amount of the fuel injection valve, the surface area of the gap between the needle valve NV and seat portion ST must be increased.

To increase the surface area of the gap, a diameter R of the seat portion ST may be increased, or a maximum lift amount L of the needle valve NV may be increased. However, the seat portion ST of a typical fuel injection valve is disposed near the lower surface of a cylinder head C/H of the engine, and is therefore close to a valve portion VP of an intake valve or exhaust valve. Hence, it is difficult in reality to enlarge the diameter R of the seat portion ST. Particularly in recent years, engines with a plurality of intake valves and/or exhaust valves have increased in number, and it is therefore becoming more and more difficult to secure space on the lower surface of the cylinder head C/H. Moreover, enlarging the diameter R of the seat portion ST means enlarging a hole formed in the lower surface of the cylinder head C/H, which is unfavorable from the point of view of the durability and reliability of the cylinder head C/H.

Hence, to increase the maximum fuel injection amount of a conventional gaseous fuel injection valve, the maximum lift amount L of the needle valve NV, which is generated by the magnetostrictor, must be increased.

However, to increase the maximum lift amount L of the needle valve NV, the size (length in the vertical direction) of the magnetostrictor must be increased, which leads to an enlargement (lengthening) of the entire gaseous fuel injection valve. In particular, since the elongation rate of a magnetostrictor during driving is comparatively small in relation to its entire length (0.1%, for example), the size of the magnetostrictor, and therefore the size of the injection valve, must be increased greatly in order to increase the maximum lift amount L.

Moreover, the magnetostrictor is one of the more expensive of the members constituting the injection valve, and hence increasing the size of this member also adds to costs.

Further, by lengthening the magnetostrictor, its bending resistance decreases, and therefore the size of the magnetostrictor in the width direction (thickness direction) must also be increased. This results in dramatic size and cost increases.

It is therefore an object of the present invention to solve the problems described above by providing a gaseous fuel injection valve with which a sufficient fuel injection amount can be secured without increasing a maximum lift amount of a needle valve.

A gaseous fuel injection valve of the present invention comprises a needle valve, a seat portion which contacts the needle valve, a sac portion provided on a lower portion of the seat portion, and an injection hole formed in a lower portion of the sac portion. The injection hole is closed by having the needle valve contact the seat portion, and the injection hole is opened by lifting the needle valve so that the needle valve is separated from the seat portion. The sac portion is formed at no less than a predetermined length so that when the gaseous fuel injection valve is mounted on a cylinder head such that the injection hole faces the interior of a combustion chamber of an engine, the seat portion is positioned above a lower surface of the cylinder head. Further, a fuel injection amount is increased in relation to the lift amount of the needle valve by making the cross section of the seat portion greater than the cross section of the sac portion.

Here, the cross section of the sac portion is preferably set to a minimum cross section at which all of a maximum fuel injection amount required by the engine can be injected within a predetermined injection period, and the cross section of the seat portion is preferably set to a minimum cross section at which all of the maximum fuel injection amount can be injected within the predetermined injection period at the maximum lift amount of the needle valve.

Further, the cross section of the sac portion and the cross section of the seat portion may be circular, and the diameter of the cross section of the seat portion may be set to five or more times the diameter of the cross section of the sac portion.

Further, the length of the sac portion may be set such that the seat portion is disposed in the vicinity of a water jacket formed in the cylinder head.

Further, an actuator for lifting the needle valve may comprise a magnetostrictor or an electrostrictor.

Fig. 1 is a sectional view of a gaseous fuel injection valve according to an embodiment of the present invention.

Fig. 2A is a partially enlarged sectional view of the gaseous fuel injection valve mounted on a cylinder head.

Fig. 2B is a sectional view along a line IIb-IIb in Fig. 2A.

Fig. 3 is a view showing a relationship between the ratio of a seat portion diameter and a sac portion diameter, and the lift amount of a needle valve required to inject an equal injection amount.

Fig. 4 is a partially enlarged sectional view of a gaseous fuel injection valve according to another embodiment of the present invention.

Fig. 5 is a partially enlarged sectional view of a conventional gaseous fuel injection valve.

A preferred embodiment of the present invention will be described in detail below on the basis of the attached drawings.

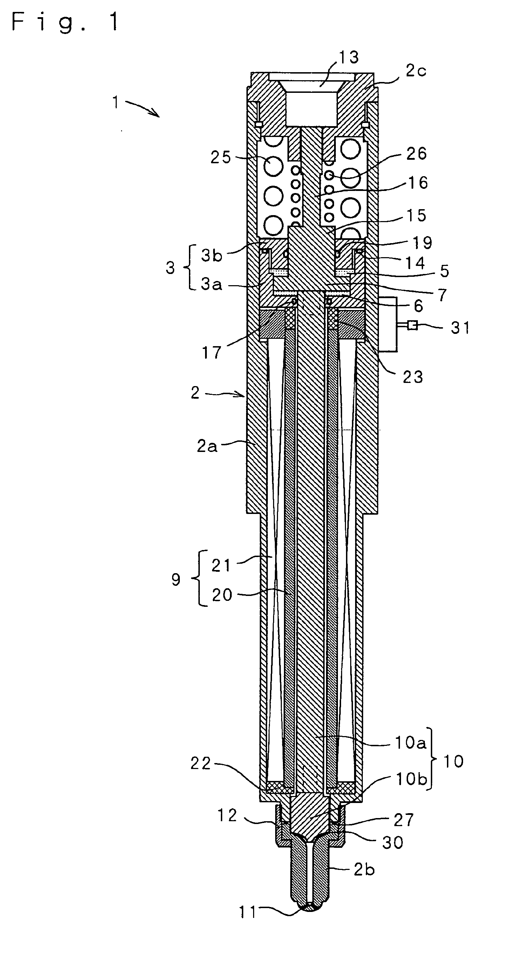

Fig. 1 is a sectional view of a gaseous fuel injection valve of this embodiment.

As shown in the drawing, a gaseous fuel injection valve 1 of this embodiment comprises a cylinder (chamber) 3 accommodated movably within a comparatively elongated barrel 2, a piston 7 accommodated movably within the cylinder 3, which partitions the interior of the cylinder 3 into an upper chamber 5 and a lower chamber 6, an incompressible viscous fluid charged into the upper chamber 5 and lower.chamber 6, an actuator 9 for raising (moving) the cylinder 3, and a needle valve 10 connected to the piston 7. When the actuator 9 raises the cylinder 3, the needle valve 10 is raised (lifted) via the viscous fluid in the lower chamber 6 and the piston 7, thereby opening an injection hole (orifice) 11 formed in the leading end (lower end) of the barrel 2 such that fuel is injected therefrom.

The barrel 2 comprises a barrel main body 2a, a tip 2b attached integrally to the lower end of the barrel main body 2a via a lock nut 12, and a cap 2c screwed onto the upper end of the barrel main body 2a. A plurality of the injection holes 11 is formed radially in the lower end of the tip 2b, and a fuel inlet 13 for introducing fuel into the barrel main body 2a is formed in the cap 2c. The gap between the barrel main body 2a and tip 2b is sealed by a sealing member 27 (an O-ring here). Note that the structure of the tip 2b will be described in detail hereafter.

The cylinder 3 is accommodated and supported within the barrel main body 2a so as to be capable of sliding in a longitudinal direction (up/down direction). The cylinder 3 is constituted by a closed-end cylinder form cylinder main body 3a, and a cylinder cap 3b screwed onto the upper end of the cylinder main body 3a. The cylinder main body 3a and cylinder cap 3b are sealed together by a sealing member 14 (an O-ring here).

The piston 7 is accommodated within the cylinder 3 so as to be capable of sliding in the same direction (up/down direction) as the sliding direction of the cylinder 3. The space in the interior of the cylinder 3 is divided into the upper chamber 5 and lower chamber 6 by the piston 7. The incompressible viscous fluid (silicone oil, for example) is charged into the upper chamber 5 and lower chamber 6.

The needle valve 10 is connected to the lower end of the piston 7, and is constituted by a substantially columnar rod 10a extending downward through the bottom wall of the cylinder main body 3a, and a substantially columnar needle 10b attached integrally to the lower end of the rod 10a. A large-diameter rod 15 extending upward through the cylinder cap 3b and a small-diameter rod 16 extending upward from the upper end of the large-diameter rod 15 are formed integrally on the upper end of the piston 7. The gap between the rod 10a of the needle valve 10 and the cylinder main body 3a and the gap between the large-diameter rod 15 and the cylinder cap 3b are sealed by sealing members 17, 19 (both O-rings here), respectively.

An actuator 9 is provided between the needle valve 10 and barrel main body 2a. The actuator 9 comprises a magnetostrictor 20 disposed on the periphery of the rod 10a of the needle valve 10, and a coil 21 disposed on the periphery of the magnetostrictor 20. The lower end of the magnetostrictor 20 abuts against the bottom wall of the barrel main body 2a via a seat 22, and the upper end abuts against the lower surface of the cylinder 3 via a seat 23.

A first urging member 25 (a coil spring here) for urging the cylinder 3 downward to press against the seat 23 and magnetostrictor 20, and a second urging member 26 (a coil spring here) for urging the needle valve 10 downward (in a valve closing direction) via the large-diameter rod 15 and piston 7 are provided between the upper surface of the cylinder 3 and the cap 2c. These springs 25, 26 are provided so as to be compressed by the cap 2c at a predetermined load.

The fuel introduced into the barrel main body 2a through the fuel inlet 13 in the cap 2c flows into the seat portion 30 of the tip 2b through a gap between the small-diameter rod 16 and cap 2c, a gap between the cylinder 3 and barrel main body 2a, a gap between the needle valve 10 and magnetostrictor 20, a gap between the needle valve 10 and tip 2b, and so on. The pressure of this supplied fuel is set at approximately 100 to 250 Bar, for example.

When the coil 21 of the actuator 9 is not energized, the needle valve 10 is urged downward by the spring 26, and hence the lower end portion of the needle valve 10 is pressed against the seat portion 30 of the tip 2b with a predetermined pressure such that the injection holes 11 are closed. Accordingly, the fuel does not reach the injection holes 11, and fuel injection is not performed.

On the other hand, when power controlled to a desired value by a controller (ECU or the like) not shown in the drawing is supplied to the coil 21 via a terminal 31, the coil 21 generates a magnetic field of an intensity corresponding to the supplied power.

When the coil 21 is magnetized, the magnetostrictor 20 elongates in the vertical direction by a length corresponding to the magnetic field intensity. At this time, the lower end of the magnetostrictor 20 is in contact with the bottom wall of the barrel main body 2a via the seat 22, and hence the magnetostrictor 20 elongates in such a manner that the cylinder 3 is pushed upward against the urging force of the spring 25. The viscous fluid is incompressible, and therefore when the cylinder 3 is pushed upward by the magnetostrictor 20, the piston 7 and needle valve 10 are lifted integrally via the viscous fluid in the lower chamber 6, and the spring 26 is deformed. As a result, the lower end of the needle valve 10 moves upward away from the seat portion 30 of the tip 2b such that the injection holes 11 are opened, whereupon the high-pressure fuel supplied up to the seat portion 30 is injected outside (into the combustion chamber) through the injection holes 11 as a spray.

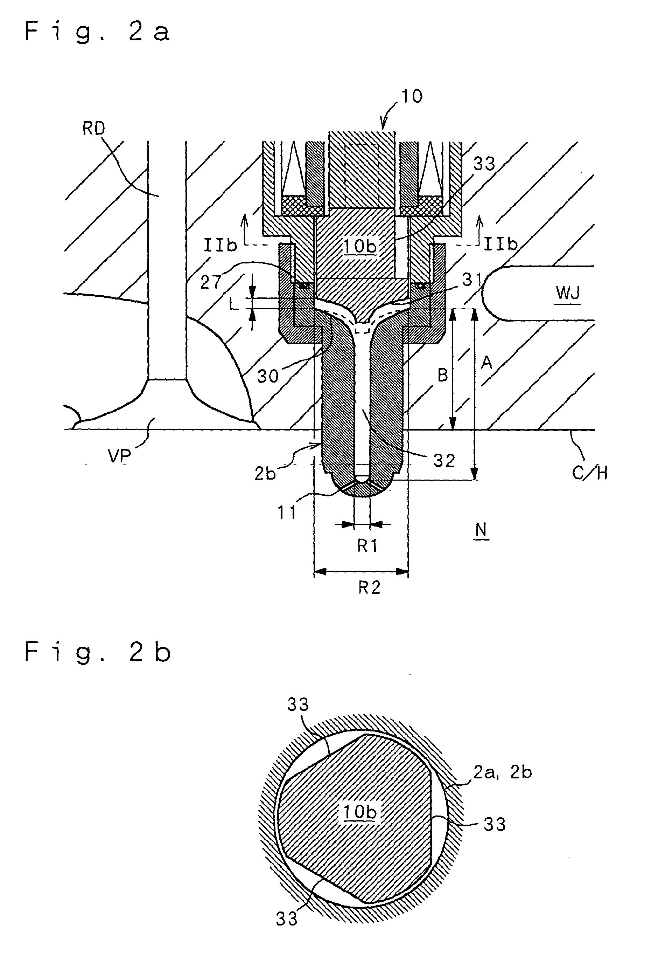

Here, the structure of the tip 2b, which is a feature of the gaseous fuel injection valve 1 of this embodiment, will be described using Figs. 2A and 2B. Fig. 2A is an enlarged sectional view of the needle 10b and tip 2b, and Fig. 2B is a sectional view along a line IIb-IIb in Fig. 2A.

As shown in the drawings, a flared valve portion 31 is formed on the lower end of the needle valve 10 (needle 10b), and the flared seat portion 30 is formed in the upper interior of the tip 2b in contact with the valve portion 31. A sac portion 32 having a circular cross section which is smaller than that of the seat portion 30 is formed in succession from the lower portion of the seat portion 30, and the injection holes 11 are formed in succession from the lower end of the sac portion 32.

The seat portion 30 is inclined further upward and outward than the valve portion 31 of the needle valve 10 at a gentle angle. The valve portion 31 and seat portion 30 both have a circular cross section, and as shown by the dotted lines in the drawing, when the needle valve 10 is positioned in its lowest position, or in other words when the lift amount of the needle valve 10 is zero, the outside site of the valve portion 31 in the diametrical direction abuts against the outside site of the seat portion 30 in the diametrical direction at a predetermined pressure such that the gap between the two members is sealed.

On the other hand, as shown by the solid line in the drawing, when the needle valve 10 is lifted by the actuator 9 (see Fig. 1), the valve portion 31 of the needle valve 10 is moved upward away from the seat portion 30. As a result, a gap is formed between the valve portion 31 and seat portion 30, and the gaseous fuel supplied up to the seat portion 30 flows into the sac portion 32 through this gap to be injected through the injection holes 11. At this time, the surface area of the gap formed between the valve portion 31 and seat portion 30 (the curtain area) can be adjusted by adjusting the amount by which the needle valve 10 is lifted by the actuator 9, and hence the fuel injection amount can be controlled. Furthermore, by adjusting the surface area of the gap between the valve portion 31 and seat portion 30, a throttling function (pressure reducing function) generated by the gap between the valve portion 31 and seat portion 30 can be adjusted, and hence the fuel injection pressure can also be controlled by adjusting the lift amount of the needle valve 10.

As shown in Fig. 2B, a plurality (three in this case) of linear notch portions 33 are formed in the part of the needle 10b above the valve portion 31 at intervals in the circumferential direction, and fuel passages are formed between these notch portions 33 and the inner surface of the barrel main body 2a and tip 2b. Further, the parts (the arc-form parts) excluding the notch portions 33 function as sliding guide surfaces between the needle 10b and the barrel main body 2a and tip 2b.

As shown in Fig. 2A, the sac portion 32 of the tip 2b extends downward from the lower end of the seat portion 30 by a predetermined length A. In other words, in the gaseous fuel injection valve 1 of this embodiment, the sac portion 32 is formed longer and narrower in the vertical direction than that of the conventional fuel injection valve shown in Fig. 5, and hence an interval A between the seat portion 30 and the injection holes 11 is set to be longer than that of the conventional example.

The length A of the sac portion 32 is set such that when the gaseous fuel injection valve 1 is mounted on the cylinder head C/H so that the injection holes 11 face the interior of a combustion chamber N of the engine, the seat portion 30 is positioned above the lower surface of the cylinder head C/H by a predetermined distance B. The distance B from the lower surface of the cylinder head C/H to the seat portion 30 is set such that the seat portion 30 is positioned above a valve portion VP of an intake valve or exhaust valve, and at the same height as a thin rod RD of the intake valve or exhaust valve. Further, in this embodiment the distance B is set such that the seat portion 30 is positioned in the vicinity of (at substantially the same height as) a water jacket WJ formed inside the cylinder head C/H.

Thus in the gaseous fuel injection valve 1 of this embodiment, first the distance B from the cylinder head C/H to the seat portion 30 is determined in accordance with the shape and constitution of the cylinder head C/H, and then the interval from the seat portion 30 to the injection holes 11, or in other words the length A of the sac portion 32, is set in accordance with this distance B.

The diameter and number of the injection holes 11 are determined on the basis of the maximum output required by the engine. More specifically, first the maximum fuel injection amount (an amount taking into account various kinds of loss and the net generated output) required to obtain the maximum output required by the engine is determined from the maximum output. The volume of the maximum fuel injection amount (a maximum volume) is then determined on the basis of the maximum fuel injection amount and the specific gravity of the gaseous fuel in use.

Meanwhile, the maximum fuel injection period is preset within a range enabling engine combustion to be performed favorably, as described above. In terms of the crank angle, for example, approximately 30 degrees is set. Hence, a minimum total surface area of the injection holes required to inject all of the aforementioned maximum volume of fuel within the maximum injection period is determined through calculation or the like, and the number and diameter of the injection holes 11 are determined on the basis of the resulting value.

Once the number and diameter of the injection holes 11 have been determined, the minimum required diameter (minimum cross section) of the sac portion 32 is determined on the basis thereof. In other words, a diameter R1 (cross section) of the sac portion 32 is set to a minimum diameter (cross section) at which all of the maximum fuel injection amount (maximum volume) can be injected within the maximum injection period.

Meanwhile, the diameter of the seat portion 30, or more specifically a diameter R2 (cross section) of the part of the seat portion 30 which contacts the valve portion 31 of the needle valve 10, is set to a minimum diameter (cross section) at which all of the maximum fuel injection amount can be injected within the maximum injection period.

Here, in the gaseous fuel injection valve 1 of this embodiment, the seat portion 30 is positioned above the lower surface of the cylinder head C/H and the valve portion VP of the intake valve or exhaust valve, as described above, and hence the diameter R2 of the seat portion 30 may be set comparatively freely. In other words, since the thin rod RD, which has a smaller cross section than the valve portion VP of the intake valve or exhaust valve, is positioned at the same height as the seat portion 30, a greater latitude of space is provided here than on the lower surface side of the cylinder head C/H. The diameter of the hole formed in the cylinder head C/H to accommodate the thin rod RD is also small, and hence the site in which the seat portion 30 is disposed also has a greater latitude of strength than the lower surface side of the cylinder head C/H.

Hence in the gaseous fuel injection valve 1, by making the diameter R2 (cross section) of the seat portion 30 greater than the diameter R1 (cross section) of the sac portion 32, the surface area of the gap formed between the valve portion 31 and the seat portion 30 (the curtain area) can be increased when the needle valve 10 is lifted. As a result, the injection amount can be increased while the needle valve 10 is lifted by the same lift amount. It is therefore possible to secure sufficiently the maximum fuel injection amount required by the engine even when the maximum lift amount L of the needle valve 10 is equal to or less than the conventional example.

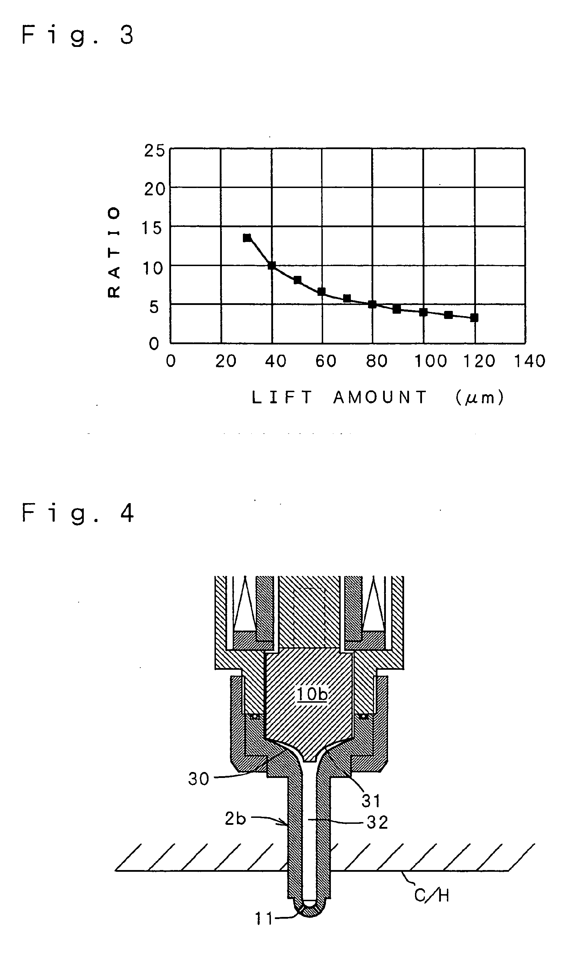

Here, the present applicant took measurements of the fuel injection amount while modifying the ratio of the diameter R2 of the seat portion 30 to the diameter R1 of the sac portion 32 in various ways. Fig. 3 shows the results of these measurements. Fig. 3 shows the lift amount required of the needle valve 10 when the maximum fuel injection amount of the conventional fuel injection valve shown in Fig. 5 is to be injected using the gaseous fuel injection valve 1 of this embodiment. Note that the maximum lift amount of the needle valve in the conventional fuel injection valve is 80µm.

The ordinate of the graph shows the ratio of the diameter R2 of the seat portion 30 to the diameter R1 of the sac portion 32, and the abscissa shows the lift amount required of the needle valve.

As can be understood from the graph, when the diameter R2 of the seat portion 30 is set to approximately five times the diameter R1 of the sac portion 32, a substantially identical performance to the conventional fuel injection valve is obtained. In other words, by making the maximum lift amount equal to the conventional maximum lift amount (80µm), an equal maximum fuel injection amount to the conventional maximum fuel injection amount is obtained.

If the ratio of the diameter R2 of the seat portion 30 to the diameter R1 of the sac portion 32 is increased further, the lift amount required of the needle valve 10 to obtain an equal maximum fuel injection amount to the conventional maximum fuel injection amount decreases. For example, by setting the diameter R2 of the seat portion 30 to approximately ten times the diameter R1 of the sac portion 32, an equal maximum fuel injection amount to the conventional maximum fuel injection amount is obtained at half (40µm) the conventional maximum lift amount.

It can be seen from these results that when the maximum fuel injection amount is set equally to the conventional maximum fuel injection amount, the maximum lift amount of the needle valve 10 can be held to or reduced below the conventional maximum lift amount by making the diameter R2 of the seat portion 30 at least five times as large as the diameter R1 of the sac portion 32. Furthermore, by setting the diameter R2 of the seat portion 30 and the diameter R1 of the sac portion 32 appropriately, the maximum lift amount of the needle valve 10 can be held to or reduced below the conventional maximum lift amount, and the maximum fuel injection amount can be increased.

Thus according to the gaseous fuel injection valve 1 of this embodiment, by forming the seat portion 30 at a remove from the injection holes 11, the seat portion 30 can be disposed in a spatially advantageous site (above the lower surface of the cylinder head C/H), and the diameter R2 of the seat portion 30 can be increased. In so doing, a sufficient fuel injection amount can be secured without increasing the lift amount of the needle valve 10. As a result, the magnetostrictor 20 can be reduced in size, enabling reductions in the overall size and cost of the gaseous fuel injection valve 1.

In other words, according to the gaseous fuel injection valve 1 of this embodiment, spatial latitude is generated by positioning the seat portion 30 above the lower surface of the cylinder head C/H, and the fuel injection amount can be increased in relation to the lift amount of the needle valve 10 by making the cross section of the seat portion 30 larger than the cross section of the sac portion 32. In so doing, a sufficient fuel injection amount can be secured without increasing the maximum lift amount of the needle valve 10.

Further, with the gaseous fuel injection valve 1 of this embodiment, the seat portion 30 is disposed far from the combustion chamber N and close to the water jacket WJ, and hence the temperature of the seat portion 30 can be reduced. As a result, the sealing capability of the seat portion 30 can be improved. More specifically, in a conventional fuel injection valve such as that shown in Fig. 5, the seat portion ST may be subjected to deformation or the like due to heat reception from the combustion chamber N, causing a deterioration in its sealing capability. With the gaseous fuel injection valve 1 of this embodiment, however, this problem can be solved simultaneously. Gaseous fuel in particular has poorer lubricating and cooling capabilities than liquid fuel, and is therefore disadvantaged in terms of sealing. Hence such sealing measures are extremely effective.

Also according to the gaseous fuel injection valve 1 of this embodiment, the lift amount of the needle valve 10 can be made smaller than that of a conventional fuel injection valve, and hence the load placed on the seat portion 30 when the valve is closed can be reduced, leading to an improvement in the durability and reliability of the seat portion 30. Moreover, by reducing the lift amount of the needle valve 10, vibration and noise produced when the valve is closed can be reduced.

Further, with the gaseous fuel injection valve 1 of this embodiment, only the long, narrow sac portion 32 is disposed on the lower surface of the cylinder head C/H, and hence spatial latitude is provided on the lower surface side of the cylinder head C/H, enabling an increase in design freedom and strength. In particular, as shown in Fig. 4, if the outer diameter of the tip 2b is narrowed to its limit in accordance with the diameter of the sac portion 32, the spatial latitude on the lower surface side of the cylinder head C/H can be increased even further.

The present invention is not limited to the embodiment described above.

For example, the sectional form of the seal portion 30, valve portion 31, and sac portion 32 is not limited to a circular form, and other forms may be used.

Further, the actuator 9 is not limited to an actuator which uses the magnetostrictor 20, and an electrostrictor or the like which elongates in accordance with supplied power may be used instead.

Further, the sealing members 14, 17, 19, 27 are not limited to O-rings, and other sealing members may be used.

Also, the first urging means 25 and second urging means 26 are not limited to coil springs, and other urging means such as plate springs may be used.

## Claims

1. A gaseous fuel injection valve having a needle valve, a seat portion which contacts the needle valve, a sac portion provided on a lower portion of the seat portion, and an injection hole formed in a lower portion of the sac portion, in which the injection hole is closed by having the needle valve contact the seat portion, and the injection hole is opened by lifting the needle valve so that the needle valve is separated from the seat portion,
**characterized in that** the sac portion is formed at no less than a predetermined length so that when the gaseous fuel injection valve is mounted on a cylinder head such that the injection hole faces the interior of a combustion chamber of an engine, the seat portion is positioned above a lower surface of the cylinder head, and
a fuel injection amount is increased in relation to a lift amount of the needle valve by making a cross section of the seat portion greater than a cross section of the sac portion.

2. The gaseous fuel injection valve according to claim 1, **characterized in that** the cross section of the sac portion is set to a minimum cross section at which all of a maximum fuel injection amount required by the engine can be injected within a predetermined injection period, and
the cross section of the seat portion is set to a minimum cross section at which all of the maximum fuel injection amount can be injected within the predetermined injection period at a maximum lift amount of the needle valve.

3. The gaseous fuel injection valve according to claim 1or claim 2, **characterized in that** the cross section of the sac portion and the cross section of the seat portion are circular, and a diameter of the cross section of the seat portion is set to at least five times a diameter of the cross section of the sac portion.

4. The gaseous fuel injection valve according to any one of the claims 1 to 3, **characterized in that** the length of the sac portion is set such that the seat portion is disposed in the vicinity of a water jacket formed in the cylinder head.

5. The gaseous fuel injection valve according to any one of the claims 1 to 4, **characterized in that** an actuator for lifting the needle valve comprises a magnetostrictor or an electrostrictor.
